# EUROPEAN PATENT SPECIFICATION

(11) **EP 3 271 084 B1**
(45) Date of publication and mention of the grant of the patent: **05.04.2023**
(21) Application number: 16716058.9
(22) Date of filing: 05.02.2016
(51) Int. Cl.: B08B 9/023, B08B 15/02, B25J 21/02, G21F 7/04

(54) **PORTABLE DECONTAMINATION DEVICE AND METHOD OF USING IT**
TRAGBARE DEKONTAMINATIONSVORRICHTUNG UND VERFAHREN ZUR VERWENDUNG DAVON
DISPOSITIF DE DÉCONTAMINATION PORTABLE ET SON PROCÉDÉ D'UTILISATION

(30) Priority: 18.03.2015 NL 141230; 28.05.2015 NL 214874
(43) Date of publication of application: 24.01.2018
(73) Proprietor: Star Equipment B.v., 5981 WX Panningen (NL)
(72) Inventor: JANSSEN, Ruud, 5981 WT Panningen (NL)
(74) Representative: Brantsandpatents bv
(86) International application number: PCT/IB2016/050604
(87) International publication number: WO 2016/147061

(56) References cited:
- EP-A2- 2 278 233
- WO-A1-88/04964
- DE-A1- 3 221 469
- DE-A1- 4 011 234
- DE-A1- 4 337 114
- DE-U1- 9 204 148
- FR-A1- 3 001 902
- US-A- 4 960 143

## Description

### INTRODUCTION

As generally known, the release of asbestos can have very harmful consequences to the health. When removing asbestos from buildings and the like, the efforts are directed at preventing that these harmful asbestos particles come into the free air.

In order to safely remove asbestos, use is often made of a hermetic containment, which ensures that nobody outside the containment can be exposed to asbestos fibres during the asbestos removal works. Because the use of a containment entails a complicated process, in which many safety measures have to be taken, the law stipulates that this can only be realized by approved companies. Use is made of a hermetic containment when there is for example asbestos-containing plate material, asbestos cardboard, asbestos cement in interior applications provided with a fastening system, bonded asbestos, sprayed asbestos, asbestos rope, etc.

The set-up of a hermetic containment is realized as follows. First, the room where the asbestos must be removed, is completely cleared from all the objects that can be moved. In rooms where there is a lot of dust, they must be cleaned prior to the process in order not to influence measurements that have to be carried out during the works. The objects that cannot be moved, are cleaned and subsequently packed in a foil.

Subsequently, a plastic foil is applied in order to come to a closed hermetical room, in which the works should be carried out. This hermetic room should be able to resist the underpressure that must be generated in the room. Use can possibly be made of a double foil, which ensures that in case of damage to the foil, there is no immediate direct contact with the ambient air.

The hermetically closed room is subsequently by means of extractors placed under an underpressure, and sufficient ventilation is added to the room. The Dutch standard of 2016 is an underpressure of 20 Pascal. A filter can be placed in the suction element as well as in the air supply of, and in, the room so that no asbestos fibres can escape to the ambient air.

After the required conditions have been produced in the room, the workers, who will remove the asbestos-containing objects, may enter the room. The workers should however be protected against asbestos fibres that can possibly come off. To this end, the workers should amongst other things wear a protective respiratory apparatus, such as a full face mask operated by a ventilator and provided with a dust filter. The workers should also wear protective clothing that is dustproof and provided with a hood that should be placed over the spin and tightening straps of the mask. At the wrists and ankles, the clothing is provided with elastic straps in order to guarantee a good sealing, so that no asbestos dust fibres can enter. Furthermore, the workers should wear appropriate shoes or boots and gloves. In some cases, a helmet is also obligatory.

A disadvantage of the above procedure is that it is complex, comprehensive and time-consuming. Also, it is no optimal situation for the workers to wear a protective respiratory apparatus and a full face mask. In the Netherlands, it has for example been stipulated that workers are, because of health reasons, not allowed to carry out any works involving a protective respiratory apparatus anymore for minimally 1 hour after they have been working for 2 hours with a protective respiratory apparatus and a full face mask. Compared to a situation without a mask, a full face mask offers a restricted view which influences the works.

After the works with respect to the removal including the decontamination have been carried out, a final control should be carried out. Only when the decontamination is carried out correctly, the cleaned site can be released. The purpose of the final control is to determine that a room or outside location meets the delivery requirements after the clean-up and asbestos removal and that the rooms are again accessible to persons without any risk of exposure to noxious asbestos fibres above the applied test criterion.

The way in which a protected area or outside location where the asbestos has been removed according to the applicable legal prescriptions, should be examined for the presence of asbestos-containing rests is in most countries legally stipulated.

A similar inspection is commonly combined with a visual inspection of the containment or protected room and a determination of the respirable asbestiform fibres in the air (final measurement) in order to check the asbestos concentration in the air of the containment or protected room against the stipulated legal concentration standard. Subsequently, the examination results are reported including a statement if the delivered removal location meets the requirements stipulated in this standard (conformity declaration).

In order to obtain a full removal, it is crucial that the generated air circulation (flow) in the containment is (as much as possible) uniform over the complete containment. Especially in the corners of the containment, this is a possible problem. There should in other words be no dead corners in which there is no or significantly less air circulation. Indeed, this leads to the local precipitation of the asbestos fibres, as a result of which there is a risk of remaining contaminations and the removal will not be carried out in accordance to the safety standards.

It is thus a purpose of the present invention to provide a decontamination device, and a related method, in which works at an object placed on a wall, especially an asbestos-containing object, can be carried out fast, easily and effectively. It is also a purpose to carry out the decontamination works in such way that they meet the quality standards and that sufficient air circulation is generated, so that there are no dead corners. In this way, the removal will be carried out optimally.

DE 43 37 114 A1 discloses a process for disposing of asbestos. At least there is a build-up of a subatmospheric pressure in the area formed by the disposal chamber.

US 4 960 143 A discloses a containment housing adapted to be supported on a pipe from which hazardous insulation is to be removed.

DE 40 11 234 A1 discloses the removal of asbestos dust from areas within buildings. The latter involves enclosing the affected area by means of air tight panels. Dust is removed using a vacuum cleaner.

WO 88 04964 A1 discloses a lightweight glove bag system for removal of asbestos impregnated brakes.

### FIGURES

Figure 1 shows schematically, in perspective, a portable decontamination device according to a preferred embodiment of the invention.
Figure 2 shows schematically, in perspective, a decontamination device shown in figure 1, seen from its back wall.
Figure 3 shows schematically, in perspective, a decontamination device shown in figure 1 and ready to use.
Figure 4 shows schematically, in perspective, a further embodiment of a portable decontamination device according to the invention.
Figure 5 and 6 show a schematic, portable decontamination device according to a preferred embodiment of the invention in which the device hangs freely around an object.
Figure 7 shows the construction of figures 5 and 6 with indication of the construction that allows to freely hang the device in figure 5 around an object.

### DESCRIPTION

The present invention relates to a portable decontamination device for carrying out contamination-causing works at an object placed on a wall. The portable decontamination device can for example be used for operations that are normally carried out in a clean room.

The present invention relates more in particular to the removal of asbestos-containing objects such as asbestos-containing windowsills, passages or flange gaskets. The removal of asbestos-containing objects is a process that is accompanied by risks, as asbestos, asbestos dust particles or asbestos fibres is/are harmful to the health of persons.

The purpose of the present invention is to provide a portable device that can clean small-scale asbestos-containing elements in a fast and effective way. Thereby, inconveniences are limited, but attention is also paid to meeting the applicable norms.

In a first aspect, the present invention provides a portable decontamination device for carrying out contamination-causing works at an object placed on a wall, in which the device contains:
- an at least partial transparent rigid frame that circumscribes a substantially hermetic working room with an object receiving opening, with which the frame can be placed over the object against the wall;
- at least one closable material opening that leads to the working room, designed for the hermetical connection thereto outside the working room of a material packaging;
- an air intake that leads to the working room, for supplying ambient air to the working room, so that there is a positive air stream in the working room;
- at least one air suction connection that leads to the working room, for suction of air out of the working room;
- at least two handling cavities that lead to the working room, designed for the hermetical connection thereto of airtight handling gloves, for carrying out the works at the object in the working room.

In particular, the decontamination device comprises an air pressure sensor connection, an air contamination sensor connection, and a registration connection that lead to the working room.

One of the advantages of the renewed decontamination device is that a controlled room is created only locally, around the object, namely the working room. In order to carry out the works, a person doesn't have to enter a controlled room anymore, but he/she can access the object from outside the working room thanks to the airtight handling gloves, that are connected to the handling openings. As a result, the exposure risk is strongly reduced to almost nil.

In this context, a person thus doesn't have to wear special clothing, shoes and/or a face mask as the person him/herself doesn't have to enter the working room. The person only has to wear safety shoes and sometimes safety goggles and/or a safety helmet as a personal protective means.

The frame is a rigid, preferably a block-shaped frame, so that it doesn't deform, and can easily be placed over the object. In an embodiment, the frame can be fabricated of a transparent plastic material such as a polycarbonate or polymethyl methacrylate material. The plastic material can in this context have antistatic properties, or be provided with an antistatic layer or coating. As a result, the walls become fibre-repellent and it is avoided that asbestos fibres will adhere to the walls and stay behind after removal. An additional advantage is that as a result of the high underpressure and the positive air stream, asbestos fibres that are possibly released prior to the clean-up, are removed by suction by the underpressure machine or vacuum cleaner and are collected in the filter of the underpressure machine or vacuum cleaner. An additional advantage is that (preferably antistatic) walls no longer have to be cleaned after removal and that the cleaning works are limited to the connections and the soil. The view of the user is hereby also guaranteed.

Optionally, other elements that are present in or at the device (other than the walls) can also be provided with an antistatic coating.

The antistatic effect can also be realized by ionising the present asbestos fibres by means of the used air stream. By giving a load to the walls as well as all other internal components of the device (e.g. gloves) that is equal to the load of the fibres or asbestos particles, a repellent effect will be obtained. As a result, fibres and particles will no longer tend to adhere to the walls.

According to the present invention, placing the frame over the object means that the object is passed through the object receiving opening into the working room of the frame, so that a person has access to the object by means of the handling gloves.

The shape of the object receiving opening is preferably adjusted to the object. That is, in the case of for example an elongated windowsill, the object receiving opening is also elongated so that the frame can be placed over the windowsill. The shape of the object receiving opening is hereby thus linked to the shape of the object.

The inventors of the present invention have moreover found that an elongated design of the device is preferred as it leads to a better positive air stream and a better removal.

As mentioned above, the contamination-causing works can relate to objects that contain asbestos, in which there is a risk that asbestos fibres are released during the works.

The contamination can also relate to other types of contamination, such as dust generation, chemical substances, etc.

Via the air suction connection, it is possible to remove air by suction out of the working room, so that an underpressure is generated. This (initial) underpressure during the cleaning-up, visual inspection and final measurement is preferably between 20 and 250 Pascal, preferably about 200 Pascal. During the disassembling works, when the workers carry out precise works in the working room wearing the airtight handling gloves, the underpressure is preferably about 80 Pascal. Combined with the positive air stream, this causes the dust particles, asbestos fibres and the like to be sucked out of the working room via the air suction connection prior to the clean-up works and to be collected in the appropriate filter, for example a HEPA14-filter.

The air suction connection is preferably designed in such way that it is appropriate for connection to an air suction system. A similar air suction system can be provided with a filter head with filter, in which the filter head can preferably be connected to the air suction connection. An appropriate filter is for example a HEPA-filter, such as a HEPA 14-filter. This filter will be important for the final release of the decontaminated site, when after cleaning-up, an additional suction is carried out by means of the installation of one or more filter heads on the air suction connection, after which the number of remaining fibres on the filters are inspected microscopically. Only when this number is lower than a predetermined release limit, the working room can be released and the portable decontamination device can be disassembled.

The air suction system will at a volume of the working room of about 0.25 m³ in particular have a capacity between 1000 and 1500 Watt, more preferably between 1100 and 1300 Watt, in which the air suction system can refresh minimum 2 m³ air per hour, preferably more than 4 m³ air per hour.

In another embodiment, the air suction system should be understood as an underpressure apparatus, in which the underpressure apparatus has for example a capacity to suck up 5000 m³ per hour.

This ensures that the underpressure and positive air stream within the device is obtained in an efficient way and can be maintained. The air suction system preferably disposes of an adjustable capacity, so that the underpressure can be set up lower during removal - when the workers carry out works wearing the airtight handling gloves -, as a result of which the sensitivity increases.

The location of the air suction connection on the device can in principle be chosen freely. The air suction connection is in particular provided at the lowest position possible, that is preferably as close as possibly at or on the ground level. The advantage is that heavier particles (tending to precipitate on the floor of the device) will possibly already be removed by the air suction system prior to the final clean-up.

In a further embodiment, a second air suction connection is present, at which an air suction system can also be connected. This air suction connection is preferably located in a corner or at a side which is different from the corner or side where the first connection is located. By providing a second air suction connection, an air flow can be realised that is different from the flow obtained if only one air suction connection is present or active. By providing a different suction point and/or by the alternate use of the different suction points, a varying air stream can also be created. This ensures that possibly precipitated dust particles will still be removed as a result of the variation in air stream. The suction points are preferably used alternately, in which there is always at least one suction point that is operative.

An additional advantage of the provision of several air suction connections is that the legally required underpressure in the device is guaranteed, also in case of a pressure drop (for example in the presence of a cavity in the windowsills that have to be cleaned). As soon as such a pressure drop is detected, a second or next suction point can be activated, as a result of which the pressure drop is compensated and the legally required underpressure standard is met. The inventors of the present invention have found that also when for example a handling glove is broken and should be replaced during removal - worst case scenario - there is still an underpressure, as a result of which it is avoided that asbestos particles end up outside the portable decontamination unit.

In a further example, the air suction connection and the air inlet are in essence separated as much as possible in the working room.

In a further or other embodiment, a first air suction connection and an air inlet are positioned in a diagonal plane of the frame, in which the air suction connection and the air inlet are preferably placed at the extreme corners of this diagonal plane, more preferably at the corners at a diagonal line. This will ensure that a cross air stream is created, that is favourable for the generation of a positive air stream everywhere in the portable decontamination unit and as a result also favourable to the removal works as a whole.

The advantage is that the uniformity with which the air is sucked up, is as constant as possible over the whole working room. This is, all air present in the working room is sucked up as good as possible, not only part of it.

In the embodiment in which a second air suction connection is present, this air suction connection will preferably be provided at another position than the position of the first air suction connection and the air inlet. More preferably, this second connection is located in a corner at the frame, in which this corner is different from the corner where the first connection and the air inlet are located.

Again, the advantage is that an optimal air circulation can be obtained everywhere in the portable decontamination unit.

The said air inlet is preferably provided with a filter, so that in case of a possible power failure, no asbestos particles can still leave the portable contamination unit.

In a further or another embodiment, a second air inlet will be provided that enters active air by means of for example a compressor (active air inlet). It is important that the underpressure in the portable decontamination unit still meets the applicable requirements and standards. By actively blowing in air, the advantage is that possible (precipitated) asbestos fibres are sucked up by means of the air suction connection out of the working room prior to the cleaning works. This active air inlet is preferably provided with a non-return valve and means to bring the air inlet in opened and closed condition. These means preferably comprise a handle. The non-return valve prevents that in case of a possible overpressure, for example as a result of power failure as a result of which the underpressure machine turns off, air with asbestos particles can escape from the portable decontamination unit to the outside.

In a preferred embodiment of the present invention, a passive as well as an active air inlet will be provided. Whereas the passive air inlet will automatically let air pass and consequently acts as a filter, the active air inlet will bring in active air by means of for example a compressor.

The active air inlet will preferably be provided at the side where the passive air inlet is located. This active air inlet is preferably located at the lowest position possible, that is preferably as close as possibly at or on the ground level.

By providing one or more air inlets, the underpressure and the velocity of the air circulation within the device can be regulated. If the underpressure is too high, there is a risk that the operator will not be able to carry out the removal works properly. By lowering the underpressure, this problem can be prevented.

In order to avoid that particles adhere or settle to the ground, the ground can also be provided with one or more air inlets or air inlet systems, as a result of which a minimum air circulation can be provided on the ground. Possible embodiments to realise this include a tubular instrument or tube with air release openings provided in the floor of the device or a floor coating coupled with an air inlet, in which the coating is provided with openings that are placed over the surface of the coating, where the air can flow in.

Optionally, one or more corners of the working room can be provided with one or more profiles that are provided in these corners, promoting the air circulation in these corners. In a preferred embodiment, the profile will round off the corner. As a result, the appearance of a so-called 'dead corner' can be avoided.

In an embodiment, at least the corners adjacent to the side walls positioned perpendicular to the air stream, will be provided with one or more profiles as these corners are most susceptible to form a dead corner. In a further embodiment, all corners will be provided with one or more profiles.

Another or a further way to guarantee the air circulation within the device, is to provide a plenum where the supply or the discharge of air can take place.

As a result, there are many small air inlets (for example 1000), hence a more uniform air stream can be created in the working room. In a preferred embodiment, a filter will be present at the head side and function as dividing body.

Said measures contribute all individually and combined to guaranteeing an optimal air circulation in the device and avoiding minimisation of the appearance of dead corners.

In an example of the present invention, the at least one closable material opening is located at the short side wall of the frame.

It is particularly important when the object is relatively extended, and when it is desired that this object is removed from the working room prior to the clean-up and final control. By means of the closable material opening, this object can, in packed condition, easily be removed c.q. sluiced out via the side wall.

In another example, the object receiving opening is located opposite to the at least two handling cavities.

Hereby, the object has thus penetrated the working room via a back wall, and a user can approach this object via a front side, wearing the handling gloves.

In another example, the device contains a two-sided closable equipment sluice that leads to the working room, for supplying and removing equipment or other materials to and from the working room.

This sluice hereby contains two lids, an input lid and an output lid. When placing an equipment into the working room, the input lid first has to be opened and the equipment has to be placed within the sluice. Subsequently, the input lid has to closed before opening the output lid.

The advantage is that it is possible to move equipment, and possibly other material, in and out of the working room, without the contamination escaping via this sluice.

In another example, the device contains at least one equipment driving connection that leads to the working room, for supplying energy from outside the working room for driving an equipment in the working room or for example compressed air or via hydraulics.

The energy can for example be used for activating equipment that is present in the working room. It can for example be a bit, hammer or the like to remove the object from the wall. The equipment can for example work on electric energy or compressed air or hydraulics, in which this energy can thus be supplied from outside the working room via the equipment driving connection up to the working room.

The provision of a driving connection working on compressed air allows to connect a spray-gun or the like, as a result of which air can be blown into the device. This can be advantageous for the clean-up of the device after use (e.g. for blowing away the remaining parts or fibres in the dead corners).

The provision of a hydraulic driving connection allows to connect equipment such as a flange spreader, whereby a lot of power must be generated. A flange spreader is necessary to spread for example two flanges that connect two pipeline to each other so that the (asbestos-containing) gasket between the flanges, can be removed.

In a further example, the device contains at least one air monitoring connection that leads to the working room, such as an air pressure sensor connection, an air contamination sensor connection and a registration connection.

These connections are preferably appropriate to be used in an asbestos-containing environment, that is the connections are appropriate so that asbestos cannot leak via these connections.

The advantage of similar connections is that the air pressure can be controlled, so that the air suction connection, i.e. de air suction device, can be turned up or down. It is thus possible to regulate the air pressure by means of a regulation loop.

Moreover, the air contamination sensor connection is appropriate for measuring the air contamination after the works have been completed (so-called release). This is important to be sure that sufficient contamination has been sucked up, so that the remaining air is relatively clean. Only when it has been determined that the air meets certain predetermined clean-up criteria, the portable decontamination device can be removed from the wall and/or the object.

In a preferred embodiment, the device contains three air monitoring connections, in which one connection is designed for permanent underpressure registration and minimum two connections are appropriate for carrying out the final control to measure and register during the whole process (till the release).

A heating element can be provided which prevents condensation in the device.

In a further example, the device contains height-adjustable support members, for placing the frame solidly supported on an underground over the object.

Similar supporting means are for example trestles, in which the device is supported by the trestles when it is placed over the object. Since the supporting means are height-adjustable, it is made possible to use the device for several applications, that is for several different objects. Hence, it is possible to carry out works with one single device on several objects, that hang at different heights. In addition to trestles, a tower waggon or scaffold can also be used as supporting means in this context.

In a further example, the device further contains clamping means, such as a suction cup, a tightening strap and stamp, by which the frame can be clamped against the wall.

This ensures an even better sealing of the working room from the outside air, so that an underpressure can be created in the working room without leakage, that is without letting the outside air enter the working room. Also, a better locking is created, so that the risk that the portable decontamination unit gets loose as a result of for example a push during removal, can be reduced.

In an example, the frame consists of two parts, in which each part contains an object receiving opening, so that a first part of the frame can be placed over the object from a first direction, and in which a second part of the frame can be placed over the object from a second direction, opposite to the first direction. Furthermore, the frame can contain grips for moving the frame.

The present invention is appropriate for placement on or at an object such as a wall, but also on for example a roof covering. In the present case, the device will preferably be provided with a material sluice consisting of two parts, that is a 'dirty' room and a 'clean' room. The dirty room is appropriate for receiving the contaminated roof components. During the sluicing-out, the air in the dirty room is sprayed by means of connections, so that possible asbestos particles present in the air would be precipitated on the floor. Thereto, a connection can be provided for a spraying instrument. Subsequently, the cleaned and packed waste is moved to the clean material sluice and all the rooms are cleaned (in which possible precipitated asbestos particles are absorbed with a damp cloth).

The asbestos removal of a roof is commonly realized by setting-up of a storm-proof containment around a building, in which the removers work wearing a special suit and mask. In order to obtain a storm-proof containment, it must be rigidly anchored, which brings along high costs. By means of the device according to the present invention, this is avoided, which obviously means a significant cost reduction.

In a second aspect, the present invention provides a portable decontamination device for carrying out contamination-causing works at an object, in which the device contains:
- an at least partial transparent rigid frame that circumscribes a substantially hermetic working room with an object receiving opening, with which the frame can be placed over the object;
- at least one closable material opening that leads to the working room, designed for the hermetical connection thereto outside the working room of a material packaging;
- one air inlet that leads to the working room, for supplying ambient air to the working room;
- at least one air suction connection that leads to the working room, for suction of air out of the working room;
- at least two handling cavities that lead to the working room, designed for the hermetical connection thereto of airtight handling gloves, for carrying out the works at the object in the working room.

In particular, the decontamination device comprises an air pressure sensor connection, an air contamination sensor connection, and a registration connection that lead to the working room.

A similar portable decontamination device is for example appropriate for the removal of an asbestos-containing material, for example a gasket, which is present in case of isolation material, or flanges, buses or the like connecting the tubings.

The leading idea behind this embodiment is that the decontamination device hangs freely as it were, as a result of which it doesn't have to be supported by a wall, or trestles or the like.

To realize this, the decontamination device can be attached by means of tightening straps, snake clips or the like to the object (e.g. tube).

In another embodiment, the object (e.g. tube) is provided with a construction, after which the decontamination device is placed against this construction, or attached thereto, in order to carry out the works at the object.

The frame of the decontamination device can in this case for example be block-shaped.

The frame will preferably contain at least two object receiving openings, that are preferably present on the corresponding sides of the frame. More preferably, the object receiving openings are placed symmetrically and they are identical in form.

In a further embodiment, the frame will consist of two frame parts, in which the dividing axis preferably extends through the object receiving opening.

The advantage is that the frame parts can be easily placed over a hanging object.

The two frame parts can be attached to each other to form a complete frame again.

In another embodiment, specifically for situation in which a device according to the present invention has to be provided around a flange connection, a construction is provided at the object that allows the device to hang freely around the tube in which the device is supported by the tube. Thereto, the device as described above consists of two pyramid-shaped frame parts, that can be attached to each other via a side surrounded by an open plane. This side is provided with a recess that is appropriate for receiving a tube. The recess is preferably semi-circular, as a result of which when attaching the two frame parts, a complete circular recess is formed, appropriate for receiving a tube. Hence, the part of the tube that has to be cleaned, is enclosed by the device.

The recess is subsequently circumscribed by a construction at the outer side of the frame, so that no air or material from the inside of the device can escape.

This construction preferably contains 4 moon-shaped or semi-circular elements, that can form a cuff sealing together. Two plate elements are in particular provided, and two disk elements, in which the plate element have a diameter that is larger than the disk elements.

The two frame parts will in particular be placed over the object (tube) that has to be cleaned via the object receiving openings and these frame parts will be attached to the outside of the frame by means of the 4 elements, that are placed around the tube to form a flange- or cuff-shaped construction. By means of attachment elements, the assembly is fixed and the frame will hence be attached free-hanging or floating to the tube and will also be able to turn freely around the object.

In an embodiment, a recess is provided in the construction, that allows to carry out works in the frame by means of electric, air driven or hydraulic tools outside the frame. The advantage is that works that are required before the actual asbestos removal, can be carried out, in which a safe environment is also created for the operator during these works. Amongst other things in case of works at a flange connection, it may be necessary to 'unscrew' the connection (loosen the screw bolts so that these become hand-tight). These works are commonly realized before the actual asbestos removal and can theoretically (in some cases) lead to the release of asbestos-containing particles. By carrying out these works in the protected environment of the device according to the present invention, the operator is at all times protected.

In a further embodiment, the device can be provided with suspension means, that allow the device to be anchored to an upper point (e.g. ceiling). Thereto, the frame can be provided with suspension points that allow the frame to be attached to an upper point by means of cables and/or ropes.

It will be clear that this device can also be provided with the elements such as described above, in particular connections, corner profiles, etc.

The devices according to the present invention can be provided with visualisation means to help with the visual inspection during the final control and the release of the site. These visualisation means can amongst other things include a (wireless) camera, that is brought into the device. Image transfer to for example a PC can subsequently be realized by means of a bluetooth connection or other connection. This method allows to carry out the required visual inspection at the cleaned-up in a more targeted way.

In a third aspect, the invention provides a method for carrying out contamination-causing works at an object such as an object placed on a wall or a free-hanging object, by means of a portable decontamination device such as described above, including the steps:
- placing the frame against the wall, over the object or over the free-hanging object, so that the object is substantially located in the working room;
- applying hermetically sealing means;
- connecting an air suction device to at least one air suction connection; and
- carrying out the works at the object in the working room via the handling cavities and associated airtight handling gloves, in which at least during the works, the air is removed from the working room via the air suction device.

In particular, at least during carrying out said works, the underpressure and contamination in the working room are monitored by means of an air pressure sensor, an air contamination sensor and a registration apparatus connected to a corresponding connection.

If the object is located on a wall, the application of hermetically sealing means can be realized by applying tape, glue, foil, sealing plates or the like with which the back of the frame can be connected hermetically to the wall.

In case of a free-hanging object, a construction (such as a flange-shaped construction or a cuff) can be provided which is airtight.

As described above, the purpose of the works can be the removal of an object, the installation of an object, the maintenance of an object, etc.

Several aspects involved in embodiments of the method according to the present invention, including its advantages, correspond to aspects involved in the device according to the invention as described previously.

In an example, the application of the hermetically sealing means substantially includes the substantial sealing towards to the environment of the peripheral edge of the frame which is connected to the wall with one or more of a tape, foil and sealing plates.

In principle, the peripheral edge thus forms an edge with which the frame is pushed or placed against the wall.

In a further example, the frame is placed against the wall or a free-hanging object is clamped by means of clamping means, such as a suction cup and tightening strap and stamp.

In another example, the frame is placed over the object on height-adjustable supporting means placed on the ground, which supporting means are attached to the ground to avoid moving.

In another example, the air suction device generates an initial underpressure of at least 80 Pa in the working room, more preferably 200 Pa. As the works are carried out, this underpressure can decrease (taking into account the legally required minimum underpressure that has to be maintained, usually between 20 and 40 Pa). Pressure drops are be caused by inherent characteristics of the object which has to be cleaned (for example the presence of cavities in a windowsill) or because air is sucked up from outside (determined by the user) or because - in a worst case scenario - for example handling gloves are broken and have to be replaced.

In a further embodiment, use can be made of a stepless pressure control, in which is started with an underpressure of at least 80 Pa, more preferably 200 Pa and in which the underpressure is regulated by turning on a second suction point as soon as it unwantedly drops.

At least when carrying out the works, in an example, the underpressure and contamination in the working room are monitored by means of an air pressure sensor, air contamination sensor and registration apparatus connected to the corresponding connection. Preferably, there is one connection for the permanent underpressure registration. For the final control, two connections are provided, with which it can be checked if the air is sufficiently clean.

In another example, the object (or part of it) is removed out of the working room by means of a material packing connected to the material opening.

In a fourth aspect, the invention provides the use of the device according to one or more of the examples of a device according to the present invention, for removing an asbestos-containing object attached to a wall out of a room.

The object is in this case preferably an asbestos-containing windowsill, an asbestos-containing tube or a tube protruding from a wall.

The names of the different aspects of the device, the method and the use thereof according to the invention must not be interpreted literally. The given names only intend to briefly describe the thoughts that underlie the corresponding aspects.

The invention will now be illustrated by means of the attached figures, which are only illustrative of the invention and should not be interpreted limitatively.

In the figures, the same references for the same aspects are used to improve the legibility.

### DETAILED DESCRIPTION OF THE FIGURES

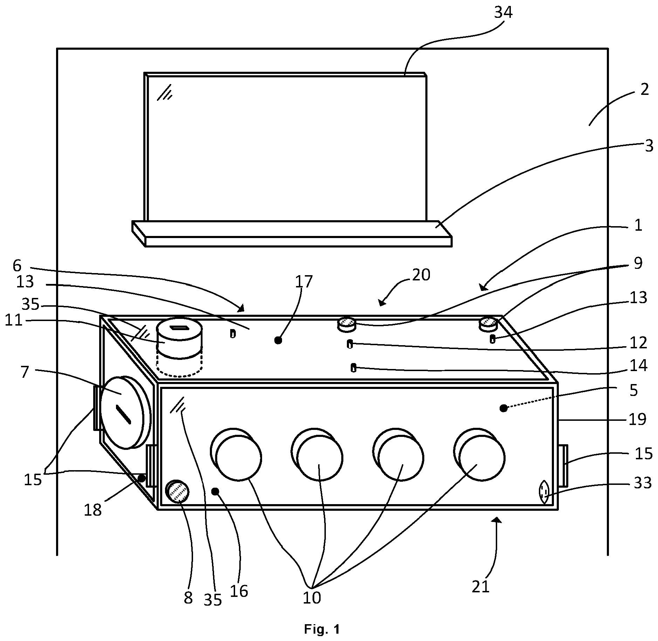

Figure 1 shows schematically, in perspective, a portable decontamination device 1 in a preferred embodiment of the invention, for carrying out contamination-causing works at an object 3 placed on a wall 2 such as for example an asbestos-containing object.

Contamination-causing works mean in the context of the present invention works at or with the object 3 as a result of which the ambient air can undesirably be contaminated with particles that are released from the object, such as for example during drilling, slicing, polishing or any other machining technique, but also for example when demounting the object 3 from the wall 2 and/or mounting the object 3 on the wall 2.

The device 1 comprises a rigid frame, such as a frame from a metal profile, for example aluminium or an appropriate stiff plastic profile. In the frame, side walls are installed as hermetically as possible, such as seen from the working set-up of the device 1 according to figure 1, a front wall 16, an upper wall 17, a left side wall 18, a right side wall 19, a back wall 20 and a lower wall 21. One or more of the side wall is made of a transparent, translucent material such as plexiglass. The front wall 16 and the upper wall 17 are preferably both designed transparent 35. The other walls can if desired be made of a non-transparent plastic material or other plate material.

The frame and the side walls 16, 17, 18, 19, 20 and 21 circumscribe an essentially hermetical working room 5, in which an object receiving opening 6 is formed in the back wall 20, for placing the frame over an object, such as the object 3.

In the working room 5, a number of connections end up, such as at least one closable material opening 7, an air inlet 8, for supplying to ambient air the working room 5, at least one air suction connection 9, for removing or sucking off contaminated air out of the working room 5 and at least two handling cavities 10, for carrying out works at an object present in the working room 5 by a person that is outside the decontamination device 1. The air inlet 8 is preferably provided with a dust filter, such as a filter known in practice under the name of P3. The air inlet 8 will preferably be located at the upper side in a corner of the device 1. Air suction connection(s) 9 are preferably located as close as possible to the ground level, or as an alternative attached to the front side or the side walls. They are most preferably attached diagonally with respect to the air inlet 8.

The material opening 7 located in the left side wall 18 is in the working room 5 provided with a closable lid or closable cap. The material opening 7 is designed for and has dimensions for removing the demounted object from the working room 5, in operation, via the material opening 7. Of course, a new object can also be placed in the working room 5 via the material opening 7, for mounting to a wall.

Although not shown in figure 1, a material opening 7 is also provided in the right side wall 19 of the frame. Of course, a material opening 7 can also be provided in another side wall of the frame.

In the preferred embodiment of the decontamination device 1 shown in figure 1, four handling cavities or manipulation openings 10 have been provided in the front wall 16, that is opposite the object receiving opening 6. It will be understood that similar handling cavities 10 can be provided also or only in the upper wall 16, the lower wall 21 and/or the left side wall 18 or the right side wall 19.

As shown in figure 1, the locations where the air suction connections 9 and the air inlet 8 lead to in the working room 5 are chosen in such way that, in operation, an air stream in the working room 5 will be formed which in this way flows through the working room 5 as completely as possible. The air suction connections 9 and the air inlet 8 are preferably spread are much as possible, for example the air inlet 8 at the left lower side and an air suction connection 9 at the right upper side of the working room 5. The air suction connections 9 and the air inlet 8 are more preferably placed diagonally with respect to each other.

For bringing in equipment, such as a screw driver, hammer, chisel or other equipment into the working room 5, an equipment sluice 11 that can be closed at two sides and leads to the working room 5 is provided in an embodiment of the decontamination device 1 according to the invention. In the embodiment shown in figure 1, a long, circular-cylindrical equipment sluice 11 is provided in the upper wall 17. The equipment sluice 11 extends from the outside to the working room 5 and is at both ends provided with a closing cap, for example by means of a screw or bayonet closure.

It is observed that the equipment can (preferably) also be introduced before placing the frame over an object. With the equipment sluice 11, it is however possible to bring equipment 5 into the working room 5 when in operation, in which the frame is placed over the object, in an easy way, without the risk of contamination of the outside air by contamination particles from the working room 5. Thereto, the equipment sluice 11 is first opened outside the working room 5, subsequently, the equipment is put into the equipment sluice, the equipment sluice 11 is closed and subsequently opened in the working room 5 and the equipment is taken out of the equipment sluice 11 into the working room, after which the equipment sluice 11 is again closed.

For using electric or by means of for example compressed air or hydraulically driven equipment in the working room 5, a decontamination device 1 is in an embodiment of the invention provided with at least one equipment driving connection that leads to the working room. In the embodiment of the decontamination device 1 shown in figure 1, a connection for compressed air connection 12, such as a compressed air valve, is provided in the upper wall 17 that leads to the working room 5. By means of this compressed air connection 12 compressed air from outside the working room 5 can be supplied, for driving the compressed air equipment in the working room 5. Of course, more than one compressed air connection 12 can be provided, also at other side walls of the device.

For driving electric equipment, an appropriate electricity connection, such as a socket outlet 33 close to the right side wall 19, is provided, which socket outlet 33 outside the decontamination device 1 can in a known way be connected to the electricity grid. In a preferred embodiment, this is positioned at the front side in the upper corner.

For monitoring in operation if there is a sufficient underpressure and/or contamination degree in the working room 5, an embodiment of the invention is further provided with at least three air monitoring connections that lead to the working room, such as an air pressure sensor connection 14, an air contamination sensor connection and registration connection 13. Such air monitoring connections are known in the state of the art and do not need further clarification for a skilled worker.

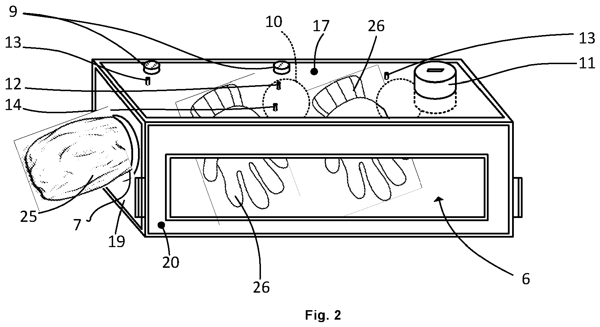

Figure 2 schematically, in perspective, shows a decontamination device 1 shown in figure 1, seen against the back wall 20. In the shown embodiment, the object receiving opening 6 extends over a part of the back wall 20.

The material opening 7 extends over a distance with respect to the left side wall 18 or the right side wall 19 out of the working room 5, for the hermetical connection to a material package 25 such as one or two double-sided discharge bag(s) or other kind of package. The material package 25 can for example be connected hermetically to the material opening by means of elastic rings placed around the protruding part of the material opening 7, or by means of appropriate clamp rings or the like. Via the connected material package 25, an object can be safely put in the package after opening the cap of the material opening 7 for removing the object, without any risk of contamination of the ambient air. Material packages, such as double-sided discharge bags, for use in the decontamination device according to the invention, are known in the state of the art.

In figure 2, handling gloves 26 are shown that are in an airtight manner connected to the handling cavities 10 and extend into the working room 5, but are hermetical in the working room 5, for carrying out the works at an object in the working room 5. A user (not shown) can from outside the decontamination device 1 bring in one or both hands in a similar handling glove 26 and in this way, without contacting the air in the working room 5, carry out works at an object in the working room 5. Handling gloves for the purpose of the invention are known in the state of the art. The material of a handling glove 26 is preferably adapted to the type of contamination that is expected.

The handling gloves 26 can be firmly attached in a handling cavity or manipulation opening 10 or they can be loosely connected, wherefore the handling cavities 10 extend over a distance outside the working room 5, for example for connecting the handling glove hermetically at a handling cavity 10 by means of an elastic ring or strap. Other than shown, the handling gloves 26 can also consist of a cylindrical handling bag or the like. When in use, unused handling cavities are of course closed off from the outside air. This can easily be realised by connecting a handling glove 26 to each handling cavity 10 or by placing a cap.

In the embodiment shown in figure 1, the decontamination device 1 is designed with a block-shaped, elongated frame. The dimensions of the frame, in the length, width as well as the height and the dimensions of the object receiving opening 6 are amongst other things chosen based on the dimensions of an object 3 to treat such as for example a windowsill or pipe or tube and the like, and sufficient place to carry out operations at an object in the working room 5. Practical dimensions of the portable decontamination device 1 are for example 100-500 cm long, 30-50 cm wide and 30-50 cm high. Of course, the invention is not limited to these dimensions and the frame can also be designed otherwise than block-shaped, such as for example elongated with a triangular cross-section, circular-cylindrical, etc.

For easily carrying and transporting the decontamination device 1, grips 15 can be provided at the left and right side wall 18, 19.

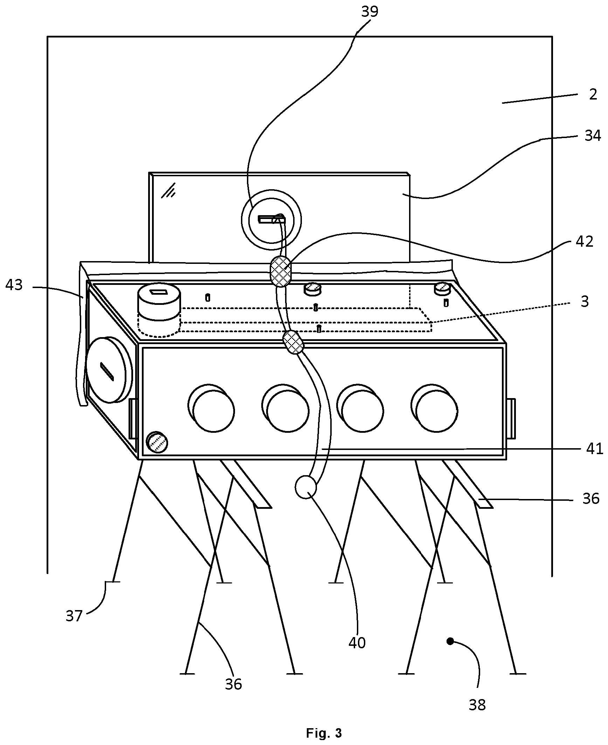

Figure 3 shows schematically, in perspective the decontamination device 1 shown in figure 1 in use, for removing an object 3, such as a windowsill 3 mounted on the wall 2 of a room under a glass window 34.

The frame is thereto placed with its object receiving opening 6 over the object to treat, i.e. the windowsill 3 and placed with its back wall 20 against the wall 2. So that the part of the object 3 protruding out of the wall 1 is located in the working room 5.

Subsequently, the peripheral edge of the frame located against the wall 2 is sealed as much hermetically as possible, by means of sealing means around this peripheral edge and connected to the side walls 17, 18, 19 and 21 and wall 2 and window 34, such as for example one or more of an adhesive plastic tape, foil and/or sealing plates. Of course, other appropriate sealing means can be used for sealing the working room 5 hermetically towards the ambient air. The sealing plates are for example used for sealing bigger c.q. larger peripheral edges such as for example along the window 24 mounted sunken in a groove. In another embodiment, the device will automatically be sucked to the wall, by means of the used underpressure.

Subsequently, to at least one, preferably at least two of the air suction connections 9, an air suction device is connected (not shown), such as for example a vacuum cleaner known as Koala(R) for use at suction of asbestos-containing contamination. In according to prescriptions for the removal of asbestos-containing contamination, an underpressure of minimum 80, more preferably 200 Pa can be realised in the working room by means of a similar vacuum cleaner in the decontamination device with a volume of about 0,25 m³.

After turning on the suction device, the works at the object 3 in the working room 5 brought under underpressure, can be carried out, via the handling gloves 26 connected hermetically to the handling cavities 10.

The equipment possibly necessary for the works can preliminary be brought into the working room 5, that is prior to the positioning of the frame over the object 3, or via the present equipment sluice 11, as described above.

To guarantee engagement of the frame to c.q. against the wall 2, use can be made, according to an embodiment of the invention, of clamping means. Such as for example when demounting the windowsill 3, a suction cup 39 positioned on the window 34 and tightening strap 41 with tightening means 42. The tightening strap 41 is, on the one hand, attached to the suction cup 39 that is positioned on the window 34 and, on the other hand, for example with a hook 40 on another object mounted at or against the wall 2, such as a radiator or the like (not shown). Of course, the tightening strap 41 can also be attached above or under the decontamination device 1 via bolts or the like attached to the wall 2.

The decontamination device 1 can for example also be clamped by means of stamps or other known clamping material between for example two walls of a room.

For a stable and sturdy support of the frame, height-adjustable supporting means placed on the ground or floor 38 can further be provided such as schematically in figure 3 shown as height-adjustable trestles. These trestles 36 are hereby locked against shifting on the floor 38 for example by means of adhesive tape. If necessary, a protective layer can first be laid on the floor under the decontamination device 1 which has to be installed (not shown).

In practice, as a control and guarantee for removing the object 3 without or with as little contamination as possible of the environment at least during the realisation of the works, the underpressure and contamination in the working room 5 are monitored, by means of an air pressure sensor connected to the relevant air pressure sensor connection 14 and an air contamination sensor connected to the monitoring connection 13 and registration apparatus.

For removal of the object out of the working room 5, a material package is connected to the material opening 7, as described above.

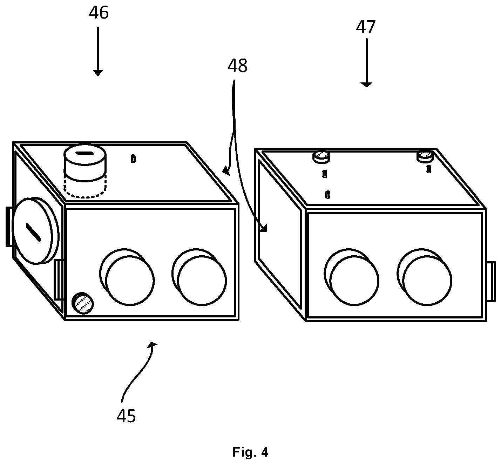

In particular for carrying out works at an object protruding out of a wall, such as a pipe, the invention provides a further embodiment in a decontamination device 45, as shown schematically, in perspective in figure 4. The frame of the decontamination device 45 consists of two parts 46, 47, in which each part contains an object receiving opening 48, so that the first part of the frame 46 can be placed over the object from a first direction or first end, and in which a second part 47 of the frame can be placed over the object from a second direction or second end, opposite to the first direction.

The connections and the like described based on the decontamination device 1 are divided in such way over both frame parts 46, 47 that the functions can be realised in mounted state as described based on figures 1, 2 and 3.

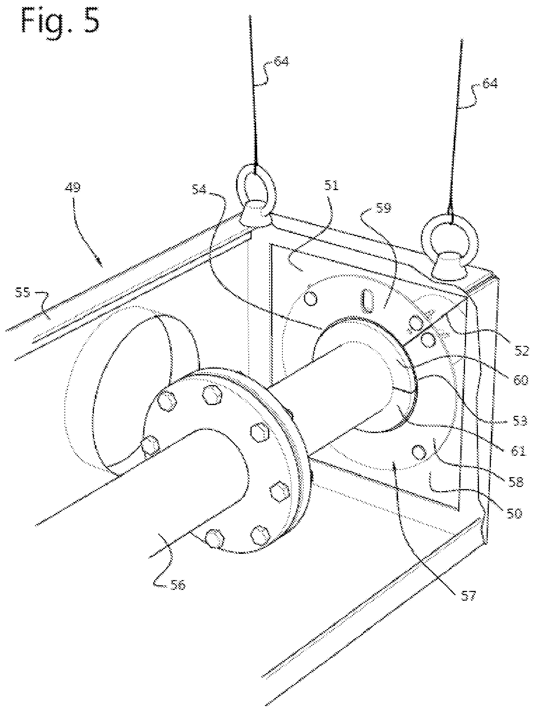

Figures 5 to 7 show an embodiment of the present invention, in which a contamination device 49 consists of two frame parts 50, 51 that can realize their function in mounted position, as described. The peripheral edges of the mounted frame can be provided with reinforcements 55, such as for example metallic cover plates. In an embodiment, a recess can be present (not shown on figure).

The frame parts 50, 51 are divided by means of a diagonal axis 52 going through object receiving openings 53, 54. The object receiving openings 53, 54 are preferably circular, and appropriate for passing a tubular object 56.

The frame parts 50, 51 can be placed over an object which has to be cleaned (in the present figure a flange connection of a free hanging tube), in which a passage for the tube is formed by means of the object receiving openings 53, 54. The axis where the two frame parts 50, 51 meet, is attached by means of clamping means such as tape.

By attaching the mounted frame to the object, a construction 57 is provided guaranteeing a correction fixture and it is also guaranteed that the device remains correctly positioned, even when a large underpressure is applied.

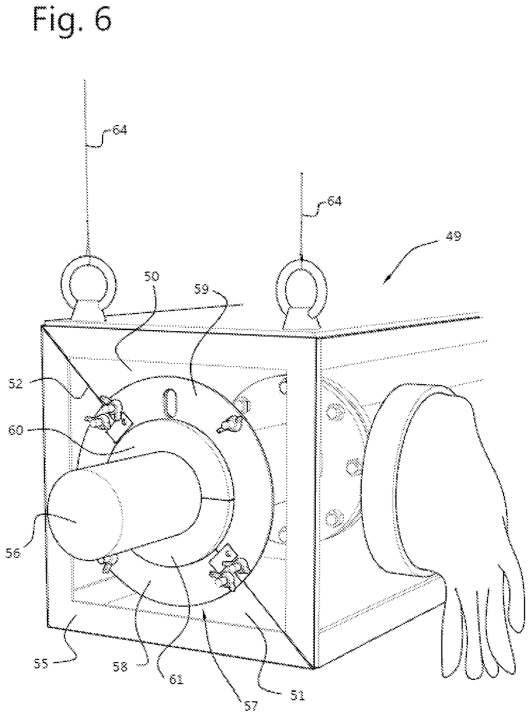

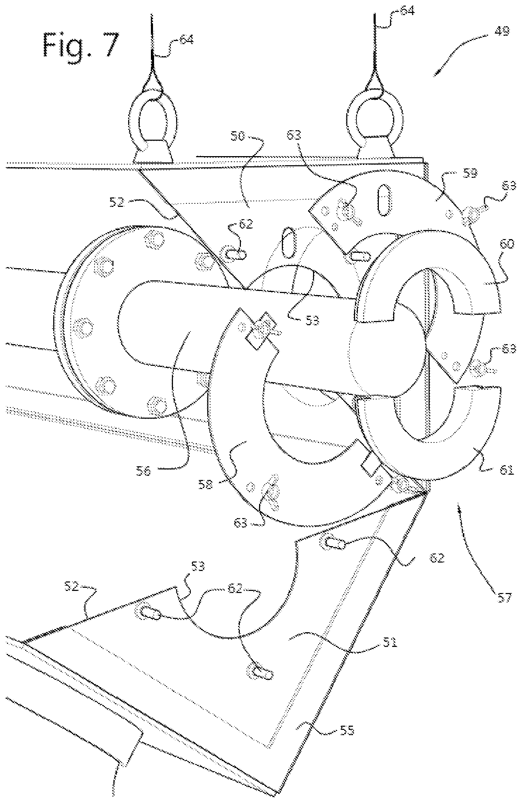

The construction 57 as shown in figure 6 in assembled position and in figure 7 in disassembled position contains moon-shaped or semi-circular elements, that form a cuff in assembled position around the tubular object 56 and at the object receiving opening 53, 54.

Two plate elements 58, 59 and two disk elements 60, 61 are provided, that each form a circle provided with an opening in assembled position, in which the diameter of the opening will depend on the diameter of the tubular object. By tightening the fixation means 62, 63, the elements will be kept in an assembled condition.

In assembled status, the plate elements 58, 59 are placed around the tubular object 56 at the outside of the mounted frame, in which it is assembled to a circle by means of fixation means 62.

Subsequently, the disk elements 60, 61 are also placed around the tubular object, in which they will rest against the plate elements 58, 59. Fixation means 63 ensure that the disk elements 60, 61 are kept together correctly.

In assembled position, the device 49 will be attached free hanging or floating to the tubular object thanks to the construction 57. The elements of the construction are preferably fabricated of metal such as for example steel or aluminium.

The plate as well as disk will, in assembled position, at all times be able to turn freely with respect to each other and the device can be brought around the free hanging tube and can turn freely.

The device 49 can further be provided with suspension means 64 for anchoring to the upper point such as a ceiling.

The present invention is not limited to the examples as described above together with the different figures. In order to guarantee the scope of the invention correctly, the following claims are relevant.

## Claims

1. A portable decontamination device (1) for carrying out contamination-causing works at an object (3), which device (1) comprises:
- an at least partially transparent, rigid frame that circumscribes a substantially hermetic working room (5), and having an object receiving opening (6), via which opening (6) said frame is configured for being placed over the object (3);
- at least one closable material opening (7) that leads to the working room (5), designed for a hermetical connection thereto of a material packaging (25), outside the working room (5);
- one air inlet (8) that leads to the working room (5), for supplying ambient air to the working room (5);
- at least one air suction connection (9) that leads to the working room (5), for suction of air from the working room (5); and
- at least two handling cavities (10) that lead to the working room (5), designed for a hermetical connection thereto of airtight handling gloves 26, for carrying out works at the object (3) within the working room (5);
**characterized in that** said decontamination device (1) comprises an air pressure sensor connection (14), an air contamination sensor connection, and a registration connection (13), which connections lead to the working room 5.

2. The device (1) according to previous claim 1, **characterized in that** said device (1) comprises one air pressure sensor connection (14), and two connections (13) for checking whether the air inside said working room (5) is sufficiently clean.

3. The device (1) according any of claims 1 or 2, **characterized in that** said frame is configured for being placed over an object (3), against a wall (2).

4. The device (1) according to any one of the preceding claims, **characterized in that** said closable material opening (7) is located at a short side wall (18, 19) of the frame.

5. The device (1) according to any one of the preceding claims, in which the air suction connection (9) and the air inlet (8) lead essentially as much separated as possible to the working room (5).

6. The device (1) according to any one of the preceding claims, in which the device (1) comprises a two-sided closable instrument sluice (11) that leads to the working room (5), for supplying and removing equipment to and from the working room (5).

7. The device (1) according to any one of the preceding claims, in which the device (1) is provided with a second air suction connection (9), preferably on a different wall than the wall where a first air suction connection (9) is located.

8. The device (1) according to any one of the preceding claims, in which the device (1) is provided in one or more corners with one or more corner profiles, for enhancing air circulation.

9. The device (1) according to any one of the preceding claims, in which the frame consists of two parts, in which each part comprises an object receiving opening (6), so that a first part of the frame can be placed over the object (3) from a first direction, and in which a second part of the frame can be placed over the object (3) from a second direction, opposite to the first direction.

10. A method for carrying out contamination-causing works on an object (3), said method comprising the steps of:
- placing a frame over the object (3), whether or not against a wall (2), so that the object (3) is essentially located within a working room (5);
- applying hermetically sealing means;
- connecting an air suction device to at least one air suction connection (9);
- carrying out the works at the object (3), within the working room (5), via handling cavities (10) and airtight handling gloves (26) hermetically thereto connected,
in which at least during carrying out said works, air is removed from the working room (5) via the air suction device, and **characterized in that** at least during carrying out said works, the underpressure and contamination in the working room are monitored by means of an air pressure sensor, an air contamination sensor and registration apparatus connected to a corresponding connection (13, 14).

11. The method according to previous claim 10, **characterized in that** the air contamination sensor connection (13) is employed in measuring the air contamination inside said working room (5) after the works have been completed.

12. The method according to any of claims 10-11, in which the air suction device generates an underpressure of at least 80 Pa, and more preferably of at least 200 Pa, within the working room (5).

13. The method according to any of claims 10-12, **characterized in that** two air suction connections (9) are provided, which connections (9) are alternately activated.

14. The use of a device according to any of claims 1-9, wherein the device is used for removing an asbestos-containing object (3) attached to a wall (2) out of a room (5).

## Patentansprüche

1. Transportable Dekontaminationsvorrichtung (1) zum Ausführen von kontaminationsverursachenden Arbeiten an einem Objekt (3), wobei die Vorrichtung (1) Folgendes umfasst:
- einen zumindest teilweise transparenten, starren Rahmen, der einen im Wesentlichen hermetischen Arbeitsraum (5) umschließt und eine Objektaufnahmeöffnung (6) aufweist, wobei der Rahmen dafür gestaltet ist, mittels dieser Öffnung (6) über dem Objekt (3) platziert zu werden,
- mindestens eine verschließbare Materialöffnung (7), die zu dem Arbeitsraum (5) führt, für einen hermetischen Anschluss einer Materialpackung (25) außerhalb des Arbeitsraumes (5) an diesen gestaltet,
- einen Lufteinlass (8), der zu dem Arbeitsraum (5) führt, um Umgebungsluft zu dem Arbeitsraum (5) zu führen,
- mindestens einen Luftabsauganschluss (9), der zu dem Arbeitsraum (5) führt, um Luft aus dem Arbeitsraum (5) abzusaugen, und
- mindestens zwei Handhabungshohlräume (10), die zu dem Arbeitsraum (5) führen, für einen hermetischen Anschluss von luftdichten Handhabungshandschuhen (26) an diesen zum Ausführen von Arbeiten an dem Objekt (3) in dem Arbeitsraum (5) gestaltet,
**dadurch gekennzeichnet, dass** die Dekontaminationsvorrichtung (1) einen Luftdrucksensoranschluss (14), einen Luftkontaminationssensoranschluss und einen Erfassungsanschluss (13) umfasst, wobei die Anschlüsse zu dem Arbeitsraum (5) führen.

2. Vorrichtung (1) nach dem vorhergehenden Anspruch 1, **dadurch gekennzeichnet, dass** die Vorrichtung (1) einen Luftdrucksensoranschluss (14) und zwei Anschlüsse (13) zum Überprüfen, ob die Luft im Inneren des Arbeitsraumes (5) ausreichend sauber ist, umfasst.

3. Vorrichtung (1) nach einem der Ansprüche 1 oder 2, **dadurch gekennzeichnet, dass** der Rahmen dafür gestaltet ist, über einem Objekt (3) an einer Wand (2) anliegend platziert zu sein.

4. Vorrichtung (1) nach einem der vorhergehenden Ansprüche, **dadurch gekennzeichnet, dass** sich die verschließbare Materialöffnung (7) an einer kurzen Seitenwand (18, 19) des Rahmens befindet.

5. Vorrichtung (1) nach einem der vorhergehenden Ansprüche, wobei der Luftabsauganschluss (9) und der Lufteinlass (8) im Wesentlichen so getrennt wie möglich zu dem Arbeitsraum (5) führen.

6. Vorrichtung (1) nach einem der vorhergehenden Ansprüche, wobei die Vorrichtung (1) eine zweiseitige, verschließbare Instrumentenschleuse (11) umfasst, die zu dem Arbeitsraum (5) führt, um Ausrüstung in den Arbeitsraum (5) einzuführen und aus diesem zu entfernen.

7. Vorrichtung (1) nach einem der vorhergehenden Ansprüche, wobei die Vorrichtung (1) mit einem zweiten Luftabsauganschluss (9) versehen ist, vorzugsweise an einer anderen Wand als der Wand, an der sich ein erster Luftabsauganschluss (9) befindet.

8. Vorrichtung (1) nach einem der vorhergehenden Ansprüche, wobei die Vorrichtung (1) in einer oder mehreren Ecken mit einem oder mehreren Eckprofilen versehen ist, um die Luftzirkulation zu verstärken.

9. Vorrichtung (1) nach einem der vorhergehenden Ansprüche, wobei der Rahmen aus zwei Teilen besteht, wobei jeder Teil eine Objektaufnahmeöffnung (6) umfasst, so dass ein erster Teil des Rahmens aus einer ersten Richtung über dem Objekt (3) platziert werden kann, und wobei ein zweiter Teil des Rahmens aus einer zweiten, der ersten Richtung entgegengesetzten Richtung über dem Objekt (3) platziert werden kann.

10. Verfahren zum Ausführen von kontaminationsverursachenden Arbeiten an einem Objekt (3), wobei das Verfahren die folgenden Schritte umfasst:
- Platzieren eines Rahmens über dem Objekt (3), anliegend an einer Wand (2) oder nicht, so dass sich das Objekt (3) im Wesentlichen in einem Arbeitsraum (5) befindet,
- Anlegen hermetischer Dichtungsmittel,
- Anschließen einer Luftabsaugvorrichtung an mindestens einen Luftabsauganschluss (9),
- Ausführen der Arbeiten an dem Objekt (3) in dem Arbeitsraum (5) mittels Handhabungshohlräumen (10) und luftdichter Handhabungshandschuhe (26), die hermetisch an diesen angeschlossen sind,
wobei zumindest während des Ausführens der Arbeiten Luft mittels der Luftabsaugvorrichtung aus dem Arbeitsraum (5) entfernt wird und **dadurch gekennzeichnet, dass** mindestens während des Ausführens der Arbeiten der Unterdruck und die Kontamination in dem Arbeitsraum mit Hilfe eines Luftdrucksensors, eines Luftkontaminationssensors und einer Erfassungseinrichtung überwacht werden, die an einen entsprechenden Anschluss (13, 14) angeschlossen sind.

11. Verfahren nach dem vorhergehenden Anspruch 10, **dadurch gekennzeichnet, dass** der Luftkontaminationssensoranschluss (13) beim Messen der Luftkontamination im Inneren des Arbeitsraums (5) nach Abschluss der Arbeiten verwendet wird.

12. Verfahren nach einem der Ansprüche 10 bis 11, wobei die Luftansaugvorrichtung in dem Arbeitsraum (5) einen Unterdruck von mindestens 80 Pa und bevorzugter von mindestens 200 Pa erzeugt.

13. Verfahren nach einem der Ansprüche 10 bis 12, **dadurch gekennzeichnet, dass** zwei Luftabsauganschlüsse (9) bereitgestellt sind, wobei die Anschlüsse (9) abwechselnd aktiviert werden.

14. Verwendung einer Vorrichtung nach einem der Ansprüche 1 bis 9, wobei die Vorrichtung verwendet wird, um ein asbesthaltiges Objekt (3), das an einer Wand (2) angebracht ist, aus einem Zimmer (5) zu entfernen.

## Revendications

1. Dispositif de décontamination portable (1) pour effectuer des travaux provoquant une contamination sur un objet (3), lequel dispositif (1) comprend :
- un cadre rigide au moins partiellement transparent qui circonscrit un espace de travail sensiblement hermétique (5), et ayant une ouverture de réception d'objet (6), ouverture (6) par laquelle ledit cadre est configuré pour être placé par-dessus l'objet (3) ;
- au moins une ouverture de matériau fermable (7), qui mène à l'espace de travail (5), conçue pour y connecter de manière hermétique un emballage de matériau (25), à l'extérieur de l'espace de travail (5) ;
- une entrée d'air (8) qui mène à l'espace de travail (5), pour introduire de l'air ambiant dans l'espace de travail (5) ;
- au moins une connexion d'aspiration d'air (9) qui mène à l'espace de travail (5), pour aspirer l'air de l'espace de travail (5) ; et
- au moins deux cavités de manipulation (10) qui mènent à l'espace de travail (5), conçues pour une connexion hermétique à celui-ci de gants de manipulation étanches à l'air (26), pour effectuer des travaux sur l'objet (3) à l'intérieur de l'espace de travail (5) ;
**caractérisé en ce que** ledit dispositif de décontamination (1) comprend une connexion de capteur de pression d'air (14), une connexion de capteur de contamination d'air, et une connexion d'enregistrement (13), lesquelles connexions mènent à l'espace de travail 5.

2. Dispositif (1) selon la revendication précédente 1, **caractérisé en ce que** ledit dispositif (1) comprend une connexion de capteur de pression d'air (14), et deux connexions (13) pour vérifier si l'air à l'intérieur dudit espace de travail (5) est suffisamment propre.

3. Dispositif (1) selon l'une quelconque des revendications 1 ou 2, **caractérisé en ce que** ledit cadre est configuré pour être placé par-dessus un objet (3), contre un mur (2).

4. Dispositif (1) selon l'une quelconque des revendications précédentes, **caractérisé en ce que** ladite ouverture de matériau fermable (7) est située au niveau d'une paroi latérale courte (18, 19) du cadre.

5. Dispositif (1) selon l'une quelconque des revendications précédentes, dans lequel la connexion d'aspiration d'air (9) et l'entrée d'air (8) conduisent essentiellement, de manière aussi séparée que possible, à l'espace de travail (5).

6. Dispositif (1) selon l'une quelconque des revendications précédentes, dans lequel le dispositif (1) comprend un sas à instruments fermable à deux côtés (11) qui mène à l'espace de travail (5), pour l'introduction et le retrait d'équipements dans l'espace de travail (5).

7. Dispositif (1) selon l'une quelconque des revendications précédentes, dans lequel le dispositif (1) est muni d'une deuxième connexion d'aspiration d'air (9), de préférence sur une paroi différente de la paroi où se trouve une première connexion d'aspiration d'air (9).

8. Dispositif (1) selon l'une quelconque des revendications précédentes, dans lequel le dispositif (1) est muni dans un ou plusieurs coins d'un ou plusieurs profilés d'angle, pour améliorer la circulation de l'air.

9. Dispositif (1) selon l'une quelconque des revendications précédentes, dans lequel le cadre est constitué de deux parties, dans lequel chaque partie comprend une ouverture de réception d'objet (6), de sorte qu'une première partie du cadre peut être placée par-dessus l'objet (3) depuis une première direction, et dans lequel une deuxième partie du cadre peut être placée par-dessus l'objet (3) depuis une deuxième direction, opposée à la première direction.

10. Procédé pour effectuer des travaux provoquant une contamination sur un objet (3), ledit procédé comprenant les étapes consistant à :
- placer un cadre par-dessus l'objet (3), contre un mur (2) ou non, de sorte que l'objet (3) soit situé essentiellement à l'intérieur d'un espace de travail (5) ;
- appliquer des moyens de fermeture hermétique ;
- connecter un dispositif d'aspiration d'air à au moins une connexion d'aspiration d'air (9) ;
- effectuer les travaux sur l'objet (3), à l'intérieur de l'espace de travail (5), par l'intermédiaire de cavités de manipulation (10) et de gants de manipulation étanches (26) connectés hermétiquement à celles-ci,
dans lequel, au moins pendant l'exécution desdits travaux, l'air est retiré de l'espace de travail (5) par l'intermédiaire du dispositif d'aspiration d'air, et **caractérisé en ce que,** au moins pendant l'exécution desdits travaux, la dépression et la contamination dans l'espace de travail sont surveillées au moyen d'un capteur de pression d'air, d'un capteur de contamination d'air et d'un appareil d'enregistrement connectés à une connexion correspondante (13, 14).

11. Procédé selon la revendication 10 précédente, **caractérisé en ce que** la connexion de capteur de contamination d'air (13) est utilisée pour mesurer la contamination de l'air à l'intérieur dudit espace de travail (5) après que les travaux ont été achevés.

12. Procédé selon l'une quelconque des revendications 10 et 11, dans lequel le dispositif d'aspiration d'air génère une dépression d'au moins 80 Pa, et plus préférentiellement d'au moins 200 Pa, à l'intérieur de l'espace de travail (5).

13. Procédé selon l'une quelconque des revendications 10 à 12, **caractérisé en ce que** deux connexions d'aspiration d'air (9) sont prévues, lesquelles connexions (9) sont activées en alternance.

14. Utilisation d'un dispositif selon l'une quelconque des revendications 1 à 9, dans laquelle le dispositif est utilisé pour retirer un objet contenant de l'amiante (3) fixé à un mur (2) depuis un espace (5).
